# EUROPEAN PATENT SPECIFICATION

(11) **EP 1 692 480 B1**
(45) Date of publication and mention of the grant of the patent: **07.03.2012**
(21) Application number: 04820422.6
(22) Date of filing: 07.12.2004
(51) Int. Cl.: G01L 5/04, G01L 5/06

(54) **TENSION INDICATOR**
SPANNUNGSANZEIGER
INDICATEUR DE TENSION

(30) Priority: 09.12.2003 SE 0303330; 11.12.2003 US 529423 P
(43) Date of publication of application: 23.08.2006
(73) Proprietor: Holmbergs Childsafety Holding AB, 302 45 Halmstad (SE)
(72) Inventor: MILLER, Peter, Noblesville, IN 46060 (US); KARLSSON, Rojel, S-330 27 Hestra (SE)
(74) Representative: VALEA AB
(86) International application number: PCT/EP2004/013908
(87) International publication number: WO 2005/059493

(56) References cited:
- US-A- 3 839 908
- US-A- 4 846 000
- US-A1- 2001 035 122
- US-B1- 6 205 868

## Description

### Field of the Invention

The present invention relates to tension indicators for determining when a required tension has been achieved in a strap or webbing. These indicators can e.g. be used with top tethers for child safety seats or for securing cargo in the transportation industry. The tension indicator can also be used for indication of the tension in ropes and similar e.g. on boats.

### Background of the Invention

Within the transportation industry it is desired to establish when sufficient tension has been applied to straps for securing cargo, since insufficient tension can lead to damages on the goods. The tension indicator can e.g. be used for securing lumber on lumber trucks, and cargo onboard boats, trucks, and aeroplanes. Another application has emerged because car manufacturers are starting to equip cars with anchor points, for anchoring child safety seats with top tethers. This increases the safety for the child because the seat becomes more rigidly secured to the chassis of the car. Top tethers have to be properly tensioned for adequately securing the seat, and this can be verified by using a tension indicator.

A tension indicator of the kind defined above is disclosed in US-B-6,205,868, which device uses a Hall-Effect sensor for measuring the tension in the webbing. The device relies on the presence of a microprocessor in the car and no visual indication is available. Another tension indicator of the above kind is disclosed in EP-A-434,441, which is a hollow rubber tube. The rubber tube is compressed by the tension in the webbing and a scale can also be formed in the side of the device for measuring the tension. This device is slightly crude, however, since the visual indication is difficult to perceive and the device can also imply a risk of being pinched.

### The Present Invention

The tension indicator according to the present invention provides a device for easily determining when a required tension has been achieved. The tension indicator is suitable for use on a webbing or a strap and it comprises a housing, a movable plunger fitted within the housing, the webbing acting substantially transversely on the plunger, and spring means interposed between the plunger and the housing biasing the plunger against the webbing. The tension indicator is characterised in that the movable plunger is formed with at least one protrusion extending through at least one aperture in the housing for visual indication of when a required tension in the webbing has been achieved.

The present invention does not rely on a microprocessor or any exterior or interior sources of electricity. By altering or changing the spring means, different levels of tension can be indicated. The invention does not infer a risk of getting pinched, since the movable plunger is contained inside the device. The indicator can also be designed for easy and secure positioning by means that increases the friction between the webbing and the indicator. One embodiment also features means for tightening the webbing, called a strap lock, and means for releasing the achieved tension.

On the sidewalls the protrusion can be designed with contrasting colours for facilitating the visual indication, whereas the surface facing in the direction of the motion of the protrusion is designed with a colour matching the housing. The movable plunger can be provided with means for giving a straight or curved motion as desired. The spring means, which urges the plunger against the webbing, can be integrally formed in the plunger or be separate springs.

### Brief Description of the Drawings

The description of the preferred embodiments shall be taken in reference with the accompanying figures, wherein
Fig. 1 is an exploded view in perspective of a first embodiment of a tension indicator according to the present invention,
Fig. 2 is a perspective view of a lower housing of the tension indicator according to Fig. 1,
Fig. 3 is a perspective view of an upper housing of the tension indicator according to Fig. 1,
Fig. 4 is a perspective view of a movable plunger of the tension indicator according to Fig. 1,
Fig. 5 is a perspective view of the lower housing with the movable plunger mounted,
Fig. 6 is a cross-sectional view in perspective of the tension indicator according to the present invention,
Fig. 7 shows an alternative embodiment of the movable plunger,
Fig. 8 shows an alternative embodiment of the movable plunger in Fig. 4, with integrally formed springing legs.
Fig. 9 is a perspective view of a second embodiment of the tension indicator according to the present invention,
Fig. 10 is an exploded view of the tension indicator illustrated in Fig. 9,
Figs. 11a and 11b show the tension indicator according to Fig. 1 with webbing in an untensioned (a) and tensioned (b) condition,
Figs. 12a and 12b show the tension indicator according to Fig. 9 with webbing in an untensioned (a) and tensioned (b) condition.

### Detailed Description of Preferred Embodiments

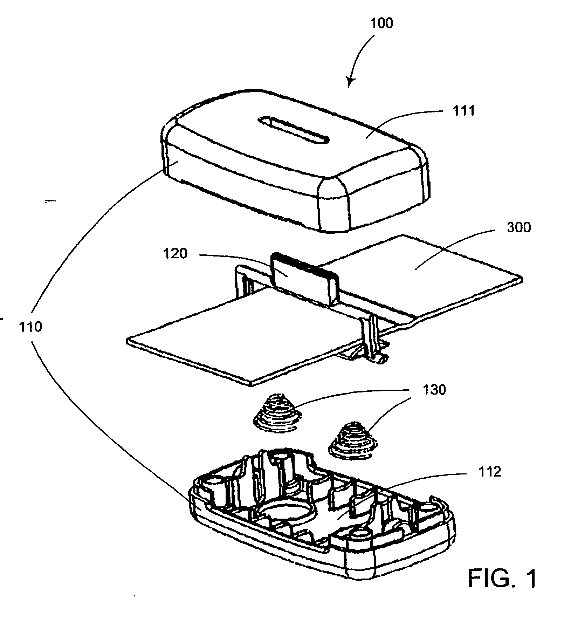

Reference is first made to Fig. 1, which shows an exploded view of a tension indicator 100 according to the present invention. Wherever a direction or relative position is given, such as upwards or top, this is related to the corresponding figure and a person skilled in the art realises that this does not change the function of the invention.

The tension indicator 100 comprises a housing 110, a movable plunger 120, and spring means 130.

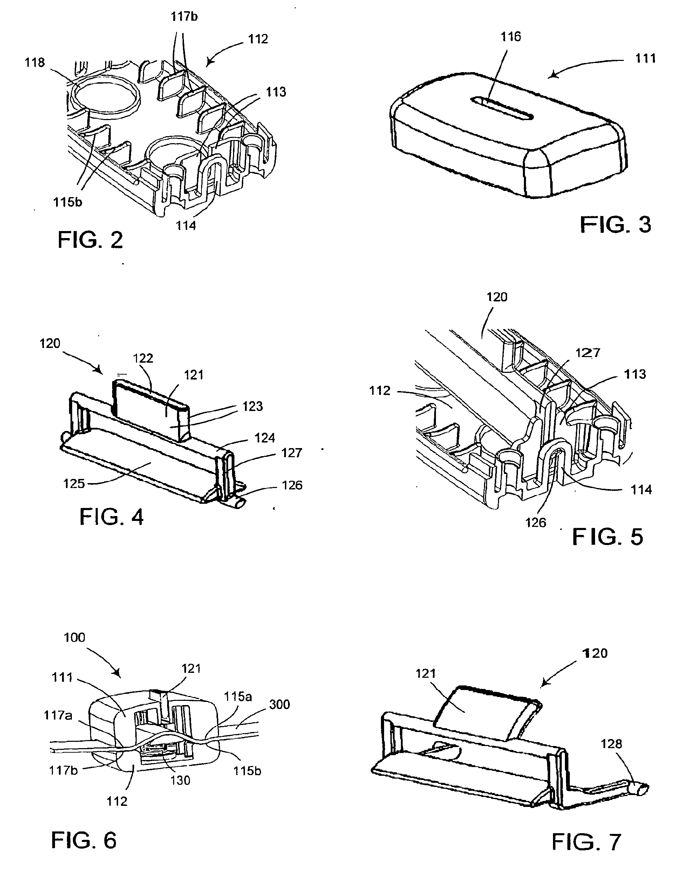

The housing 110 comprises two separate parts, an upper housing 111 and a lower housing 112. The housing 110 is mounted about a webbing 300 by some fastening means, such as screws, adhesive, snap couplings, rivets or similar. The lower housing 112 is on both short sides formed with guides 113, as is best seen in Fig. 2, for guiding the movable plunger 120 in a substantially straight line, transversely to the webbing 300. Slots 114 are formed on the outside of the guides 113 for restricting the transverse movement of the plunger 120, see Fig. 5.

On one of the long sides the upper housing 111 is equipped with curved guides 115a for the webbing 300, as shown in Fig. 6, said guides interacting with matching curved guides 115b of the lower housing. The curved guides 115a, 115b force the webbing 300 to follow a curved path, which increases the contact area between the webbing 300 and the housing 110 and thus increases the friction between the two. The upper housing 111 is formed with an aperture 116, as is best seen in Fig. 3, extending from the exterior to the interior of the housing 110. The upper 111 and lower housings 112 are also formed with straight webbing guides 117a, 117b on the side of the housing 110 opposite the curved guides 115a, 115b, as seen in Fig. 6. Moreover, the lower housing 112 has protrusions 118 for anchoring the spring means 130.

The movable plunger 120 can be designed as is shown in Fig. 4. The plunger 120 comprises a protrusion 121 with a top surface 122 and sidewall surfaces 123, a protrusion holder 124 for holding the protrusion 121, a push plate 125, and heels 126. Preferably, the protrusion 121 has on its top surface 122 a colour matching the colour of the upper housing 111 and on the sidewall surfaces 123 a colour that clearly contrasts the colour of the upper housing 111. The push plate 125 is designed for engagement with the webbing 300. The protrusion holder 124 is designed with guiding surfaces 127 for running in the guides 113 of the lower housing 112, which can be seen in Fig. 5.

The spring means 130 can be conical compression springs, as seen in Fig. 1, that are mounted between the movable plunger 120 and the housing 110.

The above mentioned tension indicator 100 can be designed in different ways without digressing from the scope of the invention. The movable plunger 120 can e.g. be equipped with a pivot 128, as is best shown in Fig. 7, which makes the plunger 120 move along a substantially circular path. In this case, the protrusion 121 for indication of webbing tension and its corresponding aperture 117 must be altered to comply with this circular motion. The protrusion(s) can also be fitted on the side of the housing and be controlled by the plunger through a linkage (not shown).

The upper 111 and lower housings 112 can be connected with a flexible sidewall (not shown) acting as a hinge. This facilitates the mounting of the tension indicator about the webbing 300.

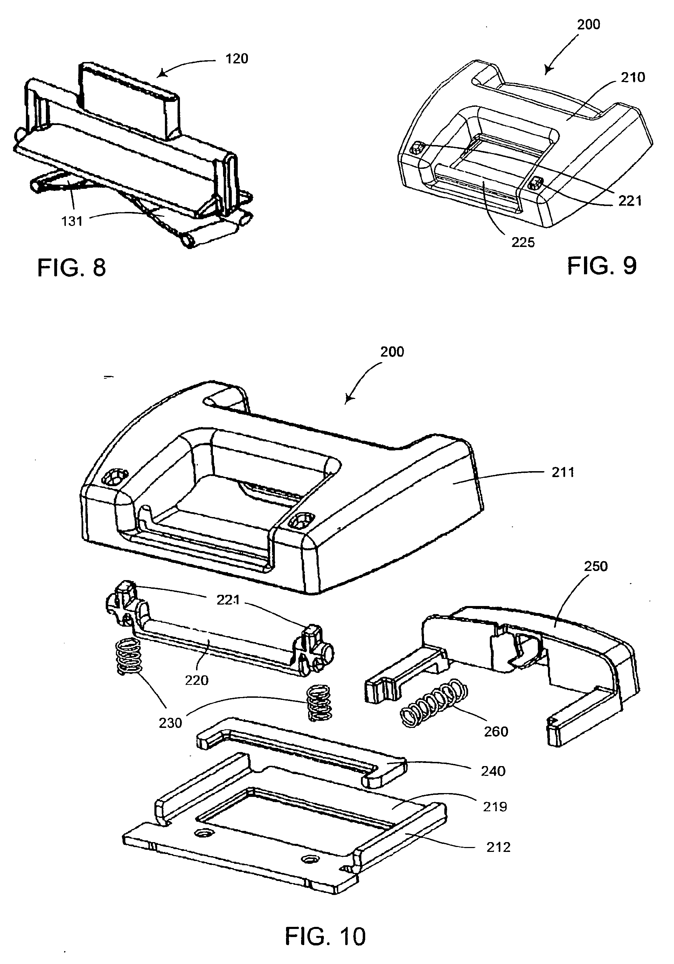

The spring means 130 can be integrally formed in the movable plunger 120, e.g. as springing legs 131 acting on the.housing 110, which can be seen in Fig. 8.

Another embodiment of the present invention can be seen in Figs. 9 and 10, where a tension indicator 200 is provided with means for applying a tension in the webbing 300, which means is called a strap lock. The strap lock comprises a part 219 of the lower housing 212 and a lock plate 240. In this embodiment, one part of the webbing 300 is formed into a loop, which encompasses the movable plunger 220 and a part of the upper 211 and the lower housing 212, and another part of the webbing is threaded through the strap lock. The latter part is used for increasing the tension in the webbing. Two protrusions 221 for indication of adequate tension are placed on opposite sides of the movable plunger 220 and the webbing 300, and the plunger 220 is biased by spring means 230 on opposite sides of the plunger 220. This embodiment is further equipped with means 250 for releasing the tension in the webbing 300, which can be a button biased by a spring means 260 according to the Figure. The lock plate 240 is mounted in grooves in the button 250, which makes the lock plate 240 travel together with the button 250. The strap lock and the button 250 for releasing the tension are previously well known in the art.

The tension indicator can also be equipped with sounding means for obtaining both a visual and an audible indication. The sounding means might be electrically powered, e.g. by a battery or an external electrical source, or be a simple mechanical device.

The tension indicator can also be designed for being an integral part of the child safety seat. In this case, the child safety seat will partly or wholly serve as the housing, making it unnecessary to supply the tension indicator separately with e.g. a top tether.

### Operation

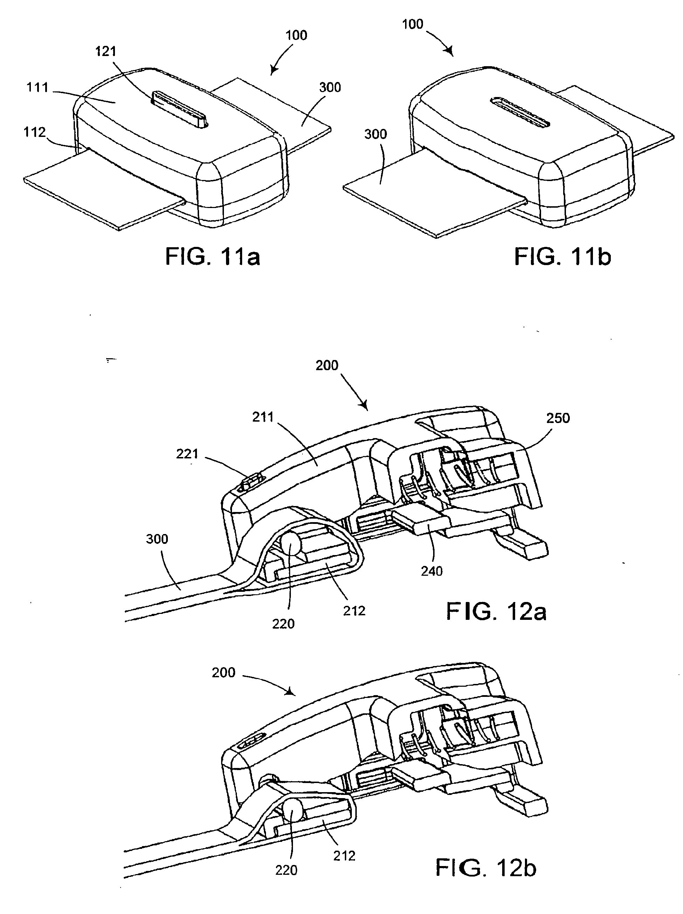

In its first embodiment, the tension indicator 100 is mounted about the webbing 300 and placed in a suitable location on the webbing 300, where it will remain due to the increased friction from the webbing guide 115a, 115b in the housing 110, see Fig. 11a. When a tension is applied to the webbing 300, it will strive to straighten which will transfer a force to the movable plunger 120. When the required tension has been applied to the webbing 300, the movable plunger 120 is forced against the lower housing 112 and the indicating coloured sidewalls 123 of the protrusion(s) 121 will be hidden inside the housing 110, as seen in Fig. 11b. The required tension can be adjusted by changing the spring means 130. In this way, the application of an adequate tension is facilitated.

The second embodiment 200, as seen in Fig. 12, requires a divided webbing 300, where one end forms a loop encompassing the movable plunger 220 and a part of the upper 211 and lower housings 212, and one end is threaded through the strap lock. The latter end can be tightened by pulling it further through the strap lock and the tension in the entire webbing 300 increases. The protrusions 221 indicate when sufficient tension has been applied, as seen in Fig. 12b. The tension in the webbing 300 is released when the button 250 is depressed, by displacing the lock plate 240 away from the lower housing 212. This means that the webbing 300 no longer is trapped between the lock plate 240 and the lower housing 212.

## Claims

1. A tension indicator (100; 200) suitable for use on a webbing (300) or a strap, said indicator comprising a housing (110; 210), a movable plunger (120; 220) fitted within the housing (110; 220), the webbing (300) acting substantially transversely on the plunger (120; 220), and spring means (130; 230) biasing the plunger (120; 220) against the webbing (300), and the movable plunger (120; 220) is formed with at least one protrusion (121; 221) extending through at least one aperture (116; 216) in the housing (110; 210) **characterized in that** the tension indicator (100; 200) is mounted on the webbing (300) and that the at least one protrusion (121; 221) is displaced into the interior of the housing (110; 210) for visual indication of when a required tension in the webbing (300) has been achieved.

2. A tension indicator (100; 200) according to claim 1, **characterised in that** the protrusion(s) (121; 221) has a colour on a first surface facing substantially in the direction of the movement of the protrusion(s) (122; 222) matching the colour of the housing (110; 210) and has another colour on second side-wall surfaces (123; 223) for facilitating the indication of the required webbing tension.

3. A tension indicator (100; 200) according to any previous claim, **characterised by** means for guiding (113; 213) the movable plunger (120; 220) along a substantially straight path.

4. A tension indicator (100; 200) according to any of claims 1-2, **characterised by** a pivot (128; 228) for guiding the movable plunger (120; 220) along a curved path.

5. A tension indicator (100; 200) according to any previous claim, **characterised in that** the spring means (130; 230) is integrally formed in the movable plunger (120; 220).

6. A tension indicator (100) according to claim 1-5, **characterised by** means for increasing the friction (115a, b) between the webbing (300) and the indicator (100), enabling the indicator (100) to remain on a prescribed location.

7. A tension indicator (100) according to claim 6, **characterised in that** the means for increasing the friction (115a, b) between the webbing (300) and the indicator (100) is formed in the housing (110).

8. A tension indicator (200) according to claims 1-5, **characterised by** means for maintaining an applied tension (240) in the webbing (300).

9. A tension indicator (200) according to claim 8, **characterised by** means for releasing the applied tension (250) in the webbing (300).

10. A tension indicator (100) according to claims 1-5, **characterised in that** the upper (111) and lower housings (112) are connected with a flexible sidewall acting as a hinge.

11. A tension indicator (100, 200) according to any previous claim, **characterised by** a sounding device activated by the movable plunger (122, 222), for both visual and audible indication of when a required tension in the webbing (300) has been achieved.

12. A tension indicator (100, 200) according to claim 11, **characterised in that** the sounding device is adapted to be electrically powered.

13. A tension indicator (100, 200) according to any previous claim, **characterised in that** at least one part of the housing (110, 210) is an integral part of a child safety seat.

## Patentansprüche

1. Spannungsanzeiger (100, 200), der zur Verwendung an einem Gurtband (300) oder einem Riemen geeignet ist, wobei der Anzeiger ein Gehäuse (110, 210), einen innerhalb des Gehäuses (110, 220) eingepassten, bewegbaren Dorn (120, 220), das im Wesentlichen quer auf den Dorn (120, 220) wirkende Gurtband (300), und ein den Dorn (120, 220) gegen das Gurtband (300) vorspannendes Federmittel (130, 230) aufweist, und der bewegbare Dorn (120, 220) mit zumindest einem Vorsprung (121, 221) ausgebildet ist, der sich durch zumindest eine Öffnung (116, 216) im Gehäuse (110, 210) erstreckt,
**dadurch gekennzeichnet, dass**
der Spannungsanzeiger (100, 200) am Gurtband (300) befestigt ist, und dass der zumindest eine Vorsprung (121, 221) in das Innere des Gehäuses (110, 210) für eine visuelle Anzeige versetzt wird, ab der eine benötigte Spannung im Gurtband (300) erreicht wurde.

2. Spannungsanzeiger (100, 200) gemäß Anspruch 1, **dadurch gekennzeichnet, dass** der Vorsprung/die Vorsprünge (121, 221) eine Farbe an einer im Wesentlichen in die Bewegungsrichtung des Vorsprungs/der Vorsprünge (122, 222) weisenden ersten Fläche aufweist, die zur Farbe des Gehäuses (110, 210) passt, und eine weitere Farbe an zweiten Seitenwandflächen (123, 223) aufweist, um eine Anzeige der benötigten Gurtbandspannung zu erleichtern.

3. Spannungsanzeiger (100, 200) gemäß einem der vorangegangenen Ansprüche, **gekennzeichnet durch** ein Mittel zum Führen (113, 213) des bewegbaren Dorns (120, 220) entlang eines im Wesentlichen geraden Pfades.

4. Spannungsanzeiger (100, 200) gemäß einem der Ansprüche 1-2, **gekennzeichnet durch** eine Schwenkachse (128, 228) zum Führen des bewegbaren Dorns (120, 220) entlang eines gekrümmten Pfades.

5. Spannungsanzeiger (100, 200) gemäß einem der vorangegangenen Ansprüche, **dadurch gekennzeichnet, dass** das Federmittel (130, 230) integral im bewegbaren Dorn (120, 220) ausgebildet ist.

6. Spannungsanzeiger (100) gemäß einem der Ansprüche 1-5, **gekennzeichnet durch** ein Mittel zum Erhöhen der Reibung (115a, b) zwischen dem Gurtband (300) und dem Anzeiger (100), welches es dem Anzeiger (100) gestattet, dass er an einem bestimmten Ort verbleibt.

7. Spannungsanzeiger (100) gemäß Anspruch 6, **dadurch gekennzeichnet, dass** das Mittel zum Erhöhen der Reibung (115a, b) zwischen dem Gurtband (300) und dem Anzeiger (100) im Gehäuse (110) ausgebildet ist.

8. Spannungsanzeiger (200) gemäß einem der Ansprüche 1-5, **gekennzeichnet durch** ein Mittel zum Halten einer aufgebrachten Spannung (240) im Gurtband (300).

9. Spannungsanzeiger (200) gemäß Anspruch 8, **gekennzeichnet durch** ein Mittel zum Freigeben der aufgebrachten Spannung (250) im Gurtband (300).

10. Spannungsanzeiger (100) gemäß einem der Ansprüche 1-5, **dadurch gekennzeichnet, dass** das obere (111) und das untere Gehäuse (112) durch eine als ein Gelenk dienende flexible Seitenwand verbunden sind.

11. Spannungsanzeiger (100, 200) gemäß einem der vorangegangenen Ansprüche, **gekennzeichnet durch** eine **durch** den bewegbaren Dorn (122, 222) aktivierte Schalleinrichtung für sowohl eine visuelle als auch eine akustische Anzeige, ab der eine benötigte Spannung im Gurtband (300) erreicht wurde.

12. Spannungsanzeiger (100, 200) gemäß Anspruch 11, **dadurch gekennzeichnet, dass** die Schalleinrichtung elektrisch angetrieben werden kann.

13. Spannungsanzeiger (100, 200) gemäß einem der vorangegangenen Ansprüche, **dadurch gekennzeichnet, dass** zumindest ein Teil des Gehäuses (110, 210) ein integrales Teil eines Kindersicherheitssitzes ist.

## Revendications

1. Indicateur de tension (100 ; 200) adapté à être utilisé sur une sangle (300) ou une courroie, ledit indicateur comprenant un boîtier (110 ; 210), un poussoir mobile (120, 220) fixé à l'intérieur du boîtier, la sangle (300) agissant essentiellement transversalement sur le poussoir (120 ; 220), et des moyens à ressort (130, 230) pressant le poussoir (120, 220) contre la sangle (300), le poussoir mobile (120, 220) étant formé avec au moins une saillie (121, 221) s'étendant à travers au moins une ouverture (116, 216) dans le boîtier (1120, 210) **caractérisé en ce que** l'indicateur de tension (110; 200) est monté sur la sangle (300) et **en ce que** l'au moins une saillie (121, 221) est déplacée vers l'intérieur du boîtier (110, 210) pour indiquer visuellement lorsqu'une tension requise de la sangle (300) est atteinte.

2. Indicateur de tension (100 ; 200) suivant la revendication 1, **caractérisé en ce que** la ou les saillie(s) (121, 221) présentent sur une première surface faisant essentiellement face à la direction du mouvement de la ou des saillie(s) (122, 222) une couleur qui correspond à la couleur du boîtier (110, 210) et sur des secondes surfaces latérales (123, 223) une autre couleur facilitant l'indication de la tension requise de la sangle.

3. Indicateur de tension (100, 200) suivant une quelconque des revendications précédentes, **caractérisé par** des moyens de guidage (113, 213) du poussoir mobile (120, 220) le long d'un chemin essentiellement droit.

4. Indicateur de tension (100, 200) suivant une quelconque des revendications 1 à 2, **caractérisé par** un tourillon (128, 228) servant à guider le poussoir mobile (120, 220) le long d'un chemin courbé.

5. Indicateur de tension (100, 200) suivant une quelconque des revendications précédentes, **caractérisé en ce que** les moyens à ressort (130, 230) sont intégralement formés dans le poussoir mobile (120, 220).

6. Indicateur de tension (100) suivant la revendication 1 à 5, **caractérisé par** des moyens servant à accroître la friction (115a, b) entre la sangle (300) et l'indicateur (100), ce qui permet à celui-ci de rester à un endroit prescrit.

7. Indicateur de tension (100) suivant la revendication 6, **caractérisé en ce que** les moyens servant à accroître la friction (115a, b) entre la sangle (300) et l'indicateur (100) sont formés dans le boîtier (110).

8. Indicateur de tension (200) suivant les revendications 1 à 5, **caractérisé par** des moyens servant à maintenir une tension appliquée (240) dans la sangle (300).

9. Indicateur de tension (200) suivant la revendication 8, **caractérisé par** des moyens servant à relâcher la tension appliquée (250) dans la sangle (300).

10. Indicateur de tension (100) suivant les revendications 1 à 5, **caractérisé en ce que** les boîtiers supérieur (111) et inférieur (112) sont reliés via une paroi latérale flexible agissant comme charnière.

11. Indicateur de tension (100, 200) suivant une quelconque des revendications précédentes, **caractérisé par** un dispositif de sondage activé par le poussoir mobile (122, 222) pour indiquer de façon visuelle et audible lorsque la tension requise dans la sangle (300) est atteinte.

12. Indicateur de tension (100, 200) suivant la revendication 11, **caractérisé en ce que** le dispositif de sondage est adapté à être alimenté électriquement.

13. Indicateur de tension (100, 200) suivant une quelconque des revendications précédentes, **caractérisé en ce qu'**au moins une partie du boîtier (110, 210) fait partie intégrale d'un siège de sécurité pour enfant.
